# EUROPÄISCHE PATENTANMELDUNG

(11) **EP 4 715 804 A1**
(43) Veröffentlichungstag der Anmeldung: **25.03.2026**
(21) Anmeldenummer: 25201819.7
(22) Anmeldetag: 12.09.2025
(51) Int. Cl.: G10K 11/168, G10K 11/172, B32B 3/26, E04B 1/86

(54) **SCHALLABSORBER**

(30) Priorität: 18.09.2024 DE 102024208913
(71) Anmelder: Fraunhofer-Gesellschaft zur Förderung der angewandten Forschung e.V., 80686 München (DE)
(72) Erfinder: MÜLLER, Benjamin, 70569 Stuttgart (DE); SPÄH, Moritz, 70569 Stuttgart (DE)
(74) Vertreter: Friese Goeden Patentanwälte PartGmbB

(57) **Zusammenfassung**

Die Erfindung betrifft einen Schallabsorber (1) enthaltend: eine Grundplatte (2) mit einer ersten Seite (21) und einer gegenüberliegenden zweiten Seite (22), welche ein schallabsorbierendes Material enthält oder daraus besteht; eine Deckplatte (3) mit einer ersten Seite (31) und einer gegenüberliegenden zweiten Seite (32), wobei die zweite Seite (32) der Deckplatte (3) auf der ersten Seite (21) der Grundplatte (2) angeordnet ist; wobei die Deckplatte (3) zumindest einen Schlitz (33) aufweist, welcher zumindest eine Teilfläche (35) der Deckplatte (3) teilweise umschließt, so dass die Teilfläche (35) über zumindest einen Verbindungsbereich (350) mit der Deckplatte (3) verbunden ist, wobei der Schallabsorber (1) in einem Frequenzbereich von circa 50 Hz bis circa 200 Hz einen Schallabsorptionsgrad von mehr als etwa 0,2 nach DIN EN ISO 10534-2 aufweist.

## Beschreibung

Die Erfindung betrifft einen Schallabsorber enthaltend eine Grundplatte mit einer ersten Seite und einer gegenüberliegenden zweiten Seite, welche ein schallabsorbierendes Material enthält oder daraus besteht und mit einer Deckplatte mit einer ersten Seite und einer gegenüberliegenden zweiten Seite, wobei die zweite Seite der Deckplatte auf der ersten Seite der Grundplatte angeordnet ist. Schallabsorber dieser Bauform können zur raumakustischen Optimierung in Gebäuden, Fahrzeugen, Flugzeugen oder im Außenraum, wie beispielweise an Gebäudefassaden, eingesetzt werden.

Aus dem Stand der Technik sind beispielweise poröse Absorber bekannt, welche eine Bautiefe von deutlich über 100 mm aufweisen. Weiterhin sind aus der DE 10 2019 106 685 A1 Helmholtz-Resonatoren bekannt, welche ebenfalls einer großen Bautiefe bedürfen und welche auf einzelne Frequenzen abgestimmt sind, sodass ihre Wirkung eher frequenzselektiv und nicht breitbandig ist. Darüber hinaus weisen Helmholtz-Resonatoren eine geringe Schallabsorption auf.

Ferner können Leichtbauwände, wie beispielweise Gipskartonwände, als Schallabsorber infrage kommen, da diese eine gewisse Schallabsorption für tiefe Frequenzen aufweisen, deren Wirkung allerdings von der jeweiligen Bausituation abhängig ist.

Aus der DE 101 51 474 A1 sind Schallabsorber mit einer Grundplatte aus porösem Material und mehreren darauf angeordneten Deckplatten bekannt, wobei die Deckplatten durch gerade verlaufende Schlitze voneinander getrennt sind. Solche Schallabsorber weisen eine nicht konstante Absorption im tiefen Frequenzbereich auf, sodass nur einen Teil des Frequenzspektrums zwischen circa 50 Hz und 250 Hz effektiv absorbiert bzw. bedämpft werden kann. Dies macht den in DE 101 51 474 A1 veröffentlichten Schallabsorber insbesondere für Hi-Fi- oder Studioanwendungen ungeeignet.

Der vorliegenden Erfindung kann in einem Aspekt die Aufgabe zugrunde liegen, einen Schallabsorber für Frequenzbereiche zwischen circa 50 Hz und 250 Hz bereitzustellen, welcher einen guten Absorptionsgrad und eine kompakte, günstige und einfache Bauart aufweist. Die nachfolgende Offenbarung betrifft unter anderem einen Schallabsorber nach Anspruch 1.

Gemäß einer Ausführungsform der Erfindung wird ein Schallabsorber vorgeschlagen, welcher eine Grundplatte und eine Deckplatte enthält. Die Grundplatte weist eine erste Seite und eine der ersten Seite gegenüberliegenden zweite Seite auf. Die Grundplatte umfasst ein schallabsorbierendes Material oder aber besteht aus einem schallabsorbierenden Material. Die Deckplatte weist eine erste Seite und eine der ersten Seite gegenüberliegenden zweite Seite auf, wobei die zweite Seite der Deckplatte auf der ersten Seite der Grund-platte angeordnet ist.

In einigen Ausführungsformen der Erfindung kann die Deckplatte zumindest einen Schlitz aufweisen, welcher zumindest eine Teilfläche der Deckplatte zumindest teilweise umschließt, so dass die Teilfläche über zumindest einen Verbindungsbereich mit der Deckplatte verbunden ist. Hierdurch wird die Teilfläche der Deckplatte so freigestellt, dass diese als schwingungsfähige Biegeplatte wirkt. Durch die Form des Schlitzes kann die Form und Größe der Teilfläche der Deckplatte beeinflusst werden. Dies erlaubt die Anpassung der Resonanzfrequenz und des Absorptionsverhaltens.

In einigen Ausführungsformen der Erfindung kann der Schallabsorber in einem Frequenzbereich zwischen circa 50 Hz und 250 Hz oder zwischen etwa 65 Hz und etwa 200 Hz oder zwischen etwa 50 Hz und etwa 150 Hz einen Schallabsorptionsgrad von mehr als etwa 0,2 aufweisen, wobei der Schallabsorptionsgrad nach der Norm DIN EN ISO 10534-2 bestimmt ist.

Der Offenbarung liegt also unter anderem der Gedanke zugrunde, eine Deckplatte mit einer schwingfähigen Teilfläche auf einer aus schallabsorbierendem Material bestehenden oder auf einer schallabsorbierendes Material enthaltenden Grundplatte anzuordnen. Dabei wird die schwingfähige Teilfläche durch die Schallwellen zum Schwingen angeregt und diese Schwingungen werden durch das schallabsorbierende Material gedämpft. Dadurch können tiefe Frequenzen in einem Bereich zwischen circa 50 Hz und 250 Hz oder zwischen etwa 65 Hz und etwa 200 Hz oder zwischen etwa 50 Hz und etwa 150 Hz über den gesamten Bereich absorbiert werden.

Gemäß einer Ausführungsform der Erfindung weist der Schallabsorber in einem Frequenzbereich zwischen circa 125 Hz und 250 Hz einen Schallabsorptionsgrad von mehr als etwa 0,4 nach DIN EN ISO 10534-2 auf.

In einigen Ausführungsformen der Erfindung weist die Deckplatte zumindest zwei Schlitze auf, welche die Teilfläche zumindest teilweise umschließen. Dadurch ist es möglich, das Schwingungsverhalten der Teilfläche zu verändern und den Absorptionsgrad im tiefen Frequenzbereich zu erhöhen und/oder an ein vorgebbares Absorptionsverhalten anzupassen. In einigen Ausführungsformen können mehr als zwei Schlitze vorhanden sein, beispielweise drei, vier oder fünf.

Gemäß einer Ausführungsform der Erfindung kann die Deckplatte eine Dicke von etwa 0,5 mm bis etwa 10 mm aufweisen. In einer anderen Ausführungsform der Erfindung kann die Deckplatte eine Dicke von etwa 1 mm bis etwa 7 mm aufweisen. In wiederum einer anderen Ausführungsform kann die Deckplatte eine Dicke von etwa 3 mm bis etwa 6 mm aufweisen. Durch Anpassen der Dicke kann die Resonanzfrequenz und damit das Absorptionsverhalten angepasst werden.

In einigen Ausführungsformen der Erfindung kann die Grund-platte eine Dicke von etwa 20 mm bis etwa 100 mm aufweisen. In einer anderen Ausführungsform der Erfindung kann die Grundplatte eine Dicke von etwa 40 mm bis etwa 90 mm aufweisen. In wiederum einer anderen Ausführungsform der Erfindung kann die Grundplatte eine Dicke von etwa 40 mm bis etwa 60 mm aufweisen. Dadurch kann der Schallabsorber schmal und kompakt gebaut werden und gleichzeitig einen guten Schallabsorptionsgrad bei tiefen Frequenzen aufweisen.

In einigen Ausführungsformen der Erfindung kann das schallabsorbierende Material porös bzw. offenporig sein. Dadurch können bekannte schallabsorbierende Materialen für den Schallabsorber verwendet werden.

In einigen Ausführungsformen der Erfindung kann das schallabsorbierende Material der Grundplatte einen Strömungswiderstand von etwa 500 Ns/m³ bis etwa 6000 Ns/m³ nach DIN EN 29053:1993-05 aufweisen. Dadurch kann der Schallabsorber bei vielen Anwendungen eingesetzt werden, in welchen ein hoher Absorptionsgrad insbesondere bei tiefen Frequenzen bei gleichzeitig geringem Bauraum vorteilhaft einsetzbar ist.

In einigen Ausführungsformen der Erfindung kann die Grund-platte ein gepresstes Polyestervlies und/oder einen Holzwerkstoff und/oder gepresste Mineralwolle und/oder gesinterten Glasschaum und/oder zementgebundenen Blähton und/oder einen duroplastischen Schaum und/oder einen Melaminharzschaum und/oder einen Naturfaserstoff und/oder einem Metallschaum und/oder Holzschaum und/oder Naturschaumstoff enthalten oder daraus bestehen. Die Grundplatte ist somit offenporig, um gute akustische Eigenschaften aufzuweisen. Darüber hinaus können solche Grundplatten auch mechanisch stabil sein, um bei Handhabung und Montage nicht beschädigt zu werden. Weiterhin können die Materialien gegen Schimmel und Fäulnis resistent sein. Auch weisen diese Materialien eine gewisse Elastizität auf, so dass die als freischwingende ausgeführte Teilfläche der Deckplatte schwingen kann und deren Schwingungen durch das Material der Grundplatte gedämpft werden können.

In einigen Ausführungsformen der Erfindung kann die Deckplatte aus Holz oder einem Polymer oder einem duroplastischen Harz oder einem Plattenwerkstoff gefertigt sein. Dadurch kann der Deckplatte eine ansprechende Optik verliehen werden bei gleichzeitig günstigem Schwingungsverhalten. Weiterhin kann durch die Wahl des Materials der Elastizitätsmodul und damit die Resonanzfrequenz und das Absorptionsverhalten angepasst werden.

In einigen Ausführungsformen der Erfindung kann der Schallabsorber ferner einen akustisch transparenten Stoff enthalten, welcher auf der ersten Seite der Deckplatte angeordnet ist. Dies erlaubt die optische Gestaltung, ohne das Absorptionsverhalten zu beeinflussen.

Alternativ oder zusätzlich kann auf der ersten Seite der Deckplatte eine erste schallabsorbierende Schicht angeordnet sein, welche aus schallabsorbierenden Material besteht oder dieses umfasst.

Die erste schallabsorbierende Schicht kann aus zumindest einem der folgenden Materialien bestehen oder zumindest ein der folgenden Materialien umfassen: gepresster Polymervlies und/oder Holzwerkstoff und/oder gepresste Mineralwolle und/oder gesinterter Glassschaum und/oder zementgebundener Blähton und/oder duroplastischer Schaum und/oder Melaminharzschaum und/oder Naturfaserstoff und/oder Metallschaum und/oder Holzschaum und/oder Naturschaumstoff. Die erste schallabsorbierende Schicht kann eine Dicke zwischen 1 mm und 150 mm aufweisen. Die erste schallabsorbierende Schicht kann eine Dicke zwischen 1 mm und 100 mm aufweisen. Die erste schallabsorbierende Schicht kann eine Dicke zwischen 5 mm und 100 mm aufweisen. Die erste schallabsorbierende Schicht kann eine Dicke zwischen 10 mm und 90 mm aufweisen Die erste schallabsorbierende Schicht kann eine Dicke zwischen 20 mm und 80 mm aufweisen. Die erste schallabsorbierende Schicht kann eine Dicke zwischen 30 mm und 70 mm aufweisen. Die erste schallabsorbierende Schicht kann eine Dicke zwischen 40 mm und 60 mm aufweisen. Die erste schallabsorbierende Schicht kann eine Dicke zwischen 45 mm und 55 mm aufweisen.

Dadurch können auch Frequenzen in einem mittleren und in einem höheren Frequenzbereich absorbiert werden. Durch die erste schallabsorbierende Schicht können Frequenzen in dem mittleren und in dem höheren Frequenzbereich besser absorbiert werden. Dadurch kann der Schallabsorber in einem Frequenzbereich von circa 50 Hz bis circa 10 kHz einen Schallabsorptionsgrad von mehr als etwa 0,2 nach DIN EN ISO 10534-2 aufweisen

In einigen Ausführungsformen der Erfindung kann der zumindest eine Schlitz trapezförmig ausgestaltet sein. In einigen Ausführungsformen der Erfindung kann der zumindest eine Schlitz halbkreisförmig ausgestaltet sein. In einigen Ausführungsformen der Erfindung kann der zumindest eine Schlitz ellipsenförmig ausgestaltet sein. In einigen Ausführungsformen der Erfindung kann der zumindest eine Schlitz U-förmig ausgestaltet sein. In einigen Ausführungsformen der Erfindung kann der zumindest eine Schlitz V-förmig ausgestaltet sein. Der Schlitz kann auch eine andere beliebige Form aufweisen. Durch die Form des Schlitzes ist es möglich, die Resonanzfrequenz und damit das Absorptionsverhalten an gewünschte Zielwerte anzupassen.

In einigen Ausführungsformen der Erfindung kann der zumindest eine Schlitz eine Breite von etwa 0,5 mm bis etwa 5 mm aufweisen. In einigen Ausführungsformen der Erfindung kann der zumindest eine Schlitz eine Breite von etwa 1 mm bis etwa 4 mm aufweisen In einigen Ausführungsformen der Erfindung kann der zumindest eine Schlitz eine Breite von etwa 1,5 mm bis etwa 3 mm aufweisen. In einigen Ausführungsformen der Erfindung kann der zumindest eine Schlitz eine Breite von etwa 2 mm bis etwa 5 mm aufweisen. Der Schlitz erlaubt neben der Ausformung eines schwingungsfähigen Plattenbereichs das unmittelbare Eindringen von Schallenergie in die Grundplatte, so dass die Energie dort dissipiert wird.

In einigen Ausführungsformen der Erfindung kann der zumindest eine Schlitz eine Länge von etwa 50 mm bis etwa 750 mm aufweisen. In einigen Ausführungsformen der Erfindung kann der zumindest eine Schlitz eine Länge von etwa 100 mm bis etwa 400 mm aufweisen. In einigen Ausführungsformen der Erfindung kann der zumindest eine Schlitz eine Länge von etwa 160 mm bis etwa 350 mm aufweisen. In einigen Ausführungsformen der Erfindung kann der zumindest eine Schlitz eine Länge von etwa 200 mm bis etwa 300 mm aufweisen. Durch die Länge des Schlitzes ist es möglich, die Resonanzfrequenz der schwingungsfähigen Biegeplatte und damit das Absorptionsverhalten an gewünschte Zielwerte anzupassen.

In einigen Ausführungsformen der Erfindung kann die Grund-platte mehrlagig aufgebaut sein. Dadurch ist es möglich, mehrere Lagen aus unterschiedlichen Materialen in der Grund-platte einzubauen, um die Schallabsorption des Schallabsorbers zu optimieren.

In einigen Ausführungsformen der Erfindung kann die Deckplatte mehrlagig aufgebaut sein. Es ist beispielweise möglich, dass die Deckplatte eine erste Lage und eine zweite Lage aufweist, wobei die erste Lage aus Holz bzw. Furnier und die zweite Lage aus einem Polymer oder einem Duroplast besteht. In anderen Ausführungsformen kann die Deckplatte eine erste Lage und eine zweite Lage aufweist, wobei die erste Lage aus einer Farbbeschichtung und die zweite Lage aus einem Polymer oder einem Duroplast besteht. Dadurch ist es möglich, die sichtbare Seite der Deckplatte optisch zu gestalten und gleichzeitig die Schallabsorption an gewünschte Zielwerte anzupassen. In wiederum anderen Ausführungsformen können zwei oder mehr Lagen der Deckplatte aus unterschiedlichen Polymeren, Duroplasten, Metallen, Holz, Legierungen, Papier und/oder Gips bestehen, um den Elastizitätsmodul und damit die Resonanzfrequenz an gewünschte Zielwerte anzupassen.

In einigen Ausführungsformen der Erfindung kann die Deckplatte einen Elastizitätsmodul von etwa 200 N·mm² bis etwa 20 kN·mm² aufweisen. In anderen Ausführungsformen der Erfindung kann die Deckplatte einen Elastizitätsmodul von etwa 500 N·mm² bis etwa 15 kN·mm² aufweisen. In wiederum anderen Ausführungsformen der Erfindung kann die Deckplatte einen Elastizitätsmodul von etwa 1 kN·mm² bis etwa 10 kN·mm² aufweisen.

In einigen Ausführungsformen der Erfindung kann die zweite Seite der Deckplatte mit der ersten Seite der Grundplatte vollflächig mit Ausnahme der zumindest einen Teilfläche verklebt sein. Dadurch ist die Deckplatte mit der Grund-platte so verbunden, dass eine stabile Bauart des Schallabsorbers erreicht wird, ohne die Schwingungsfähigkeit der durch die Schlitze freigestellten Teilflächen zu beeinträchtigen.

In einigen Ausführungsformen der Erfindung kann die zweite Seite der Deckplatte mit der ersten Seite der Grundplatte vollflächig verklebt sein. Dadurch ist die Deckplatte mit der Grund-platte so verbunden, dass eine stabile Bauart des Schallabsorbers erreicht wird, und durch die Verklebung der Teilfläche die Dämpfung und damit die Schallabsorption der durch die Schlitze freigestellten Teilflächen erhöht wird.

In einigen Ausführungsformen der Erfindung kann die zweite Seite der Deckplatte mit der ersten Seite der Grundplatte nur in Teilbereichen verklebt sein. Durch eine nur teilweise Verklebung zwischen der zweiten Seite der Deckplatte und der ersten Seite der Grundplatte kann die Deckplatte insgesamt Biegeschwingungen ausführen, welche zur weiteren Schallabsorption beitragen.

In einigen Ausführungsformen der Erfindung kann die zweite Seite der Deckplatte mit der ersten Seite der Grundplatte an deren Rändern verklebt sein. Dadurch kann die gesamte Deckplatte schwingen und zur Schallabsorption durch den Schallabsorber beisteuern.

In einigen Ausführungsformen der Erfindung kann die zweite Seite der Deckplatte mit der ersten Seite der Grundplatte nicht verklebt sein. Dadurch kann der Schallabsorber leichter gebaut werden.

In einigen Ausführungsformen der Erfindung kann zwischen der zweiten Seite der Deckplatte und der ersten Seite der Grundplatte ein Luftspalt vorhanden sein. Der Abstand zwischen der zweiten Seite der Deckplatte und der ersten Seite der Grundplatte bzw. die Dicke des Luftspalt kann zwischen 0,1 mm und 20 mm betragen. Der Abstand zwischen der zweiten Seite der Deckplatte und der ersten Seite der Grundplatte bzw. die Dicke des Luftspalts kann zwischen 2 mm und 18 mm betragen. Der Abstand zwischen der zweiten Seite der Deckplatte und der ersten Seite der Grundplatte bzw. die Dicke des Luftspalts kann zwischen 6 mm und 16 mm betragen. Der Abstand zwischen der zweiten Seite der Deckplatte und der ersten Seite der Grundplatte bzw. die Dicke des Luftspalts kann zwischen 8 mm und 12 mm betragen. Der Abstand zwischen der zweiten Seite der Deckplatte und der ersten Seite der Grundplatte bzw. die Dicke des Luftspalts kann zwischen 9 mm und 11 mm betragen.

In einigen Ausführungsformen der Erfindung können zwischen etwa 2 und etwa 10 schwingungsfähige Teilflächen pro Quadratmeter der Deckplatte freigestellt werden.

In einigen Ausführungsformen der Erfindung kann auf der zweiten Seite der Deckplatte eine zweite schallabsorbierende Schicht angeordnet sein. Die zweite schallabsorbierende Schicht kann aus zumindest einem der folgenden Materialien bestehen oder zumindest ein der folgenden Materialien umfassen: gepresster Polymervlies und/oder Holzwerkstoff und/oder gepresste Mineralwolle und/oder gesinterter Glassschaum und/oder zementgebundener Blähton und/oder duroplastischer Schaum und/oder Melaminharzschaum und/oder Naturfaserstoff und/oder Metallschaum und/oder Holzschaum und/oder Naturschaumstoff. Die zweite schallabsorbierende Schicht kann eine Dicke zwischen 1 mm und 150 mm aufweisen. Die zweite schallabsorbierende Schicht kann eine Dicke zwischen 5 mm und 100 mm aufweisen. Die zweite schallabsorbierende Schicht kann eine Dicke zwischen 10 mm und 90 mm aufweisen. Die zweite schallabsorbierende Schicht kann eine Dicke zwischen 20 mm und 80 mm aufweisen. Die zweite schallabsorbierende Schicht kann eine Dicke zwischen 30 mm und 70 mm aufweisen. Die zweite schallabsorbierende Schicht kann eine Dicke zwischen 40 mm und 60 mm aufweisen. Die zweite schallabsorbierende Schicht kann eine Dicke zwischen 45 mm und 55 mm aufweisen.

Durch die zweite schallabsorbierende Schicht können Frequenzen in dem mittleren und in dem höheren Frequenzbereich besser absorbiert werden. Dadurch kann der Schallabsorber in einem Frequenzbereich von circa 50 Hz bis circa 10 kHz einen Schallabsorptionsgrad von mehr als etwa 0,2 nach DIN EN ISO 10534-2 aufweisen.

Nachfolgend soll die Erfindung anhand von Figuren ohne Beschränkung des allgemeinen Erfindungsgedankens näher erläutert werden. Dabei zeigt:
Figur 1 einen Schallabsorber gemäß einer ersten Ausführungsform der vorliegenden Erfindung.
Figur 2 zeigt den Schallabsorber gemäß Figur 1 zusammen mit einer Schicht akustisch transparenten Stoffs.
Figur 3 zeigt einen Schallabsorber gemäß einer weiteren Ausführungsform der vorliegenden Erfindung.
Figur 4 zeigt einen Schallabsorber gemäß einer weiteren Ausführungsform der vorliegenden Erfindung.
Figur 5 zeigt einen Schallabsorber gemäß einer weiteren Ausführungsform der vorliegenden Erfindung.
Figur 6 zeigt einen Schallabsorber gemäß einer weiteren Ausführungsform der vorliegenden Erfindung.
Figur 7 zeigt einen Schallabsorber gemäß einer weiteren Ausführungsform der vorliegenden Erfindung.
Figur 8 zeigt eine Deckplatte gemäß einer Ausführungsform der vorliegenden Erfindung.
Figur 9 zeigt eine Deckplatte gemäß einer weiteren Ausführungsform der vorliegenden Erfindung.
Figur 10 zeigt eine Deckplatte gemäß einer weiteren Ausführungsform der vorliegenden Erfindung.
Figur 11 zeigt eine Deckplatte gemäß einer weiteren Ausführungsform der vorliegenden Erfindung.
Figur 12 zeigt eine Deckplatte gemäß einer weiteren Ausführungsform der vorliegenden Erfindung.
Figur 13 zeigt eine Deckplatte gemäß einer weiteren Ausführungsform der vorliegenden Erfindung.
Figur 14 zeigt eine Deckplatte gemäß einer Ausführungsform, die nicht von der Erfindung gedeckt ist.
Figur 15 zeigt eine Deckplatte gemäß einer Ausführungsform, die nicht von der Erfindung gedeckt ist.
Figur 16 zeigt eine Deckplatte gemäß einer Ausführungsform, die nicht von der Erfindung gedeckt ist.
Figur 17 zeigt den Schallabsorptionsgrad in Abhängigkeit von der Frequenz für verschiedene Schallabsorber gemäß der vorliegenden Erfindung und gemäß dem bekannten Stand der Technik.
Figur 18 zeigt den Schallabsorptionsgrad in Abhängigkeit von der Frequenz für verschiedene Schallabsorber gemäß der vorliegenden Erfindung und gemäß dem bekannten Stand der Technik.
Figur 19 zeigt den Schallabsorptionsgrad in Abhängigkeit von der Frequenz für verschiedene Schallabsorber gemäß der vorliegenden Erfindung und gemäß dem bekannten Stand der Technik.

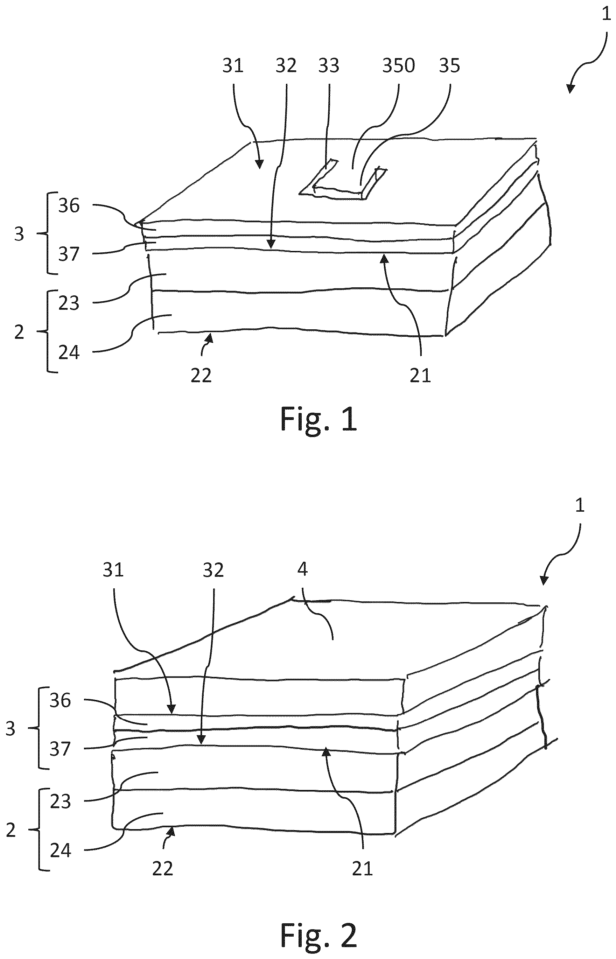

Figur 1 zeigt einen Schallabsorber 1 gemäß einer ersten Ausführungsform der Erfindung. Der Schallabsorber 1 weist eine Grundplatte 2 und eine Deckplatte 3 auf.

Die Grundplatte 2 umfasst eine erste Seite 21 und eine der ersten Seite 21 gegenüberliegende zweite Seite 22. Die Grundplatte 2 ist mehrlagig aufgebaut und umfasst eine erste Lage 23, welche die erste Seite 21 einschließt, und eine zweite Lage 24, welche die zweite Seite 22 einschließt.

Die erste Lage 23 kann beispielweise Melaminharzschaum und die zweite Lage 24 kann beispielweise Mineralwolle enthalten oder daraus bestehen. Es ist jedoch von der Erfindung vorgesehen, dass die erste Lage 23 und die zweite Lage 24 Holzwerkstoff und/oder gepresste Mineralwolle und/oder gesinterten Glasschaum und/oder zementgebundenen Blähton und/oder einen duroplastischen Schaum und/oder ein Melaminharzschaum und/oder einen Naturfaserstoff und/oder einem Metallschaum und/oder Holzschaum und/oder Naturschaumstoff enthalten oder daraus bestehen können. Die Grundplatte 2 kann eine Dicke D2 zwischen etwa 20 mm und etwa 100 mm aufweisen.

Das Material der ersten und/oder der zweiten Lage 23, 24 der Grundplatte 2 kann einen Strömungswiderstand von etwa 500 Ns/m³ bis etwa 6000 Ns/m³ nach DIN EN 29053:1993-05 aufweisen.

Die Deckplatte 3 ist ebenfalls mehrlagig ausgeführt und umfasst eine erste Lage 36, welche eine erste Seite 31 der Deckplatte 3 einschließt, und eine zweite Lage 37, welche eine zweite Seite 32 der Deckplatte 3 einschließt. Die erste Lage 36 kann beispielweise Holz enthalten oder daraus bestehen und die zweite Lage 37 kann ein duroplastisches Material und/oder ein Polymer enthalten oder aus diesem bestehen. Die Deckplatte 3 kann eine Dicke D3 zwischen etwa 0,5 mm und 10 mm aufweisen.

Die Deckplatte 3 kann einen Elastizitätsmodul von etwa 200 N·mm² bis etwa 20 kN·mm² aufweisen.

Ferner weist die Deckplatte 3 auch einen U-förmigen Schlitz 33 auf, welcher eine Teilfläche 35 der Deckplatte 3 definiert und zumindest teilweise umschließt. Der Schlitz 35 kann eine Breite B zwischen etwa 0,5 mm und etwa 5 mm aufweisen.

Die Teilfläche 35 ist mit dem restlichen Teil der Deckplatte 3, der nicht Teil der Teilfläche 35 ist, mittels eines Verbindungsbereichs 350 verbunden. In der Ausführungsform gemäß der Figur 1 ist die Teilfläche 35 eine freischwingende Biegeplatte, die nur über den Verbindungsbereich 350 mit der Deckplatte verbunden ist.

Die zweite Seite 32 der Deckplatte 3 ist auf der ersten Seite 21 der Grundplatte 2 angeordnet, sodass die erste Seite 31 der Deckplatte 3 die sichtbare Seite der Deckplatte 3 darstellt. Dadurch, dass die die erste Seite 31 einschließende erste Lage 36 der Deckplatte 3 Holz enthält oder aus Holz besteht, entsteht für den Benutzer des Schallabsorbers 1 einen angenehmeren Gesamteindruck des Schallabsorbers 1, insbesondere dann, wenn die erste Seite 31 der Deckplatte 3 Motive, Muster oder ähnliches aufweist.

Die Verbindung zwischen der ersten Seite 21 der Grundplatte 2 und der zweiten Seite 32 der Deckplatte 3 kann beispielweise durch Verklebung erfolgen. Dabei kann es vorgesehen sein, dass eine vollständige Verklebung zwischen der ersten Seite 21 der Grundplatte 2 und der zweiten Seite 32 der Deckplatte 3, mit Ausnahme der Teilfläche 35, vorgesehen ist. Auch ist es möglich, dass die zweite Seite 32 der Deckplatte 3 mit der ersten Seite 21 der Grundplatte 2 in Teilflächen verklebt, sodass nicht eine vollständige Verklebung zwischen der zweiten Seite 32 der Deckplatte 3 und die erste Seite der Grundplatte, sondern nur eine teilweise Verklebung vorhanden ist. Ferner kann es möglich sein, dass die zweite Seite 32 der Deckplatte 3 mit der ersten Seite 21 der Grundplatte 2 nur in dem Randbereich bzw. nur an deren Rändern verklebt oder gar nicht verklebt ist.

Zwischen der zweiten Seite 32 der Deckplatte 3 und der ersten Seite 21 der Grundplatte 1 kann eine hier nicht näher gezeigte zweite schallabsorbierende Schicht angeordnet sein. Die zweite schallabsorbierende Schicht kann aus zumindest einem der folgenden Materialien bestehen oder zumindest ein der folgenden Materialien umfassen: gepresster Polymervlies und/oder Holzwerkstoff und/oder gepresste Mineralwolle und/oder gesinterter Glassschaum und/oder zementgebundener Blähton und/oder duroplastischer Schaum und/oder Melaminharzschaum und/oder Naturfaserstoff und/oder Metallschaum und/oder Holzschaum und/oder Naturschaumstoff. Die zweite schallabsorbierende Schicht kann eine Dicke zwischen 1 mm und 100 mm aufweisen.

Darüber hinaus kann auch vorgesehen sein, dass zwischen der zweiten Seite 32 der Deckplatte 3 und der ersten Seite 21 der Grundplatte 2 ein hier nicht näher gezeigter Luftspalt vorhanden ist. Der Abstand zwischen der zweiten Seite 32 der Deckplatte 3 und der ersten Seite 21 der Grundplatte 2 bzw. die Dicke des Luftspalts, kann zwischen 0,1 mm und 20 mm betragen.

Der Schallabsorber 1 gemäß der Figur 1 kann in einem hier nicht näher gezeigten Gehäuse oder einem geschlossenen oder offenen Rahmen aufgenommen werden, welches dem Schallabsorber 1 mechanische Stabilität verleiht und der Transport des Schallabsorbers 1 vereinfacht.

Figur 2 zeigt einen Schallabsorber 1 gemäß der Figur 1, wobei der Schallabsorber 1 ferner eine Schicht akustisch transparenten Stoffs 4, wie zum Beispiel Lautsprecherstoff, aufweist, wobei die Schicht akustisch transparenten Stoffs 4 auf der ersten Seite 31 der Deckplatte 3 angeordnet ist.

Alternativ oder zusätzlich kann auf der ersten Seite 31 der Deckplatte 3 eine hier nicht näher gezeigte erste Schicht angeordnet sein, welche aus schallabsorbierenden Material besteht oder dieses umfasst. Die erste schallabsorbierende Schicht kann aus zumindest einem der folgenden Materialien bestehen oder zumindest eines der folgenden Materialien umfassen: gepresster Polymervlies und/oder Holzwerkstoff und/oder gepresste Mineralwolle und/oder gesinterter Glassschaum und/oder zementgebundener Blähton und/oder duroplastischer Schaum und/oder Melaminharzschaum und/oder Naturfaserstoff und/oder Metallschaum und/oder Holzschaum und/oder Naturschaumstoff. Die erste schallabsorbierende Schicht kann eine Dicke zwischen 1 mm und 150 mm aufweisen. Die erste schallabsorbierende Schicht kann eine Dicke zwischen 1 mm und 100 mm aufweisen.

Der Schallabsorber 1 gemäß der Ausführungsform der Figuren 1 und 2 weist in einem Frequenzbereich von circa 50 Hz bis circa 200 Hz einen Schallabsorptionsgrad von mehr als etwa 0,2 nach DIN EN ISO 10534-2 auf.

Der Schallabsorber 1 gemäß der Ausführungsform der Figuren 1 und 2 kann in einem Frequenzbereich von circa 50 Hz bis circa 10 kHz einen Schallabsorptionsgrad von mehr als etwa 0,2 nach DIN EN ISO 10534-2 aufweisen, wenn die erste und/oder die zweite schallabsorbierende Schicht vorhanden ist.

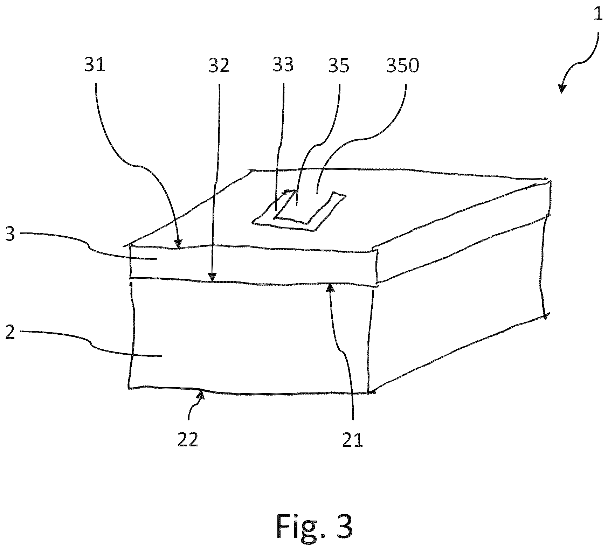

Figur 3 zeigt einen Schallabsorber 1 gemäß einer weiteren Ausführungsform der vorliegenden Erfindung. In Unterschied zu der Ausführungsform gemäß den Figuren 1 und 2 sind die Grundplatte 2 und die Deckplatte 3 in der Ausführungsform gemäß der Figur 3 nicht mehrlagig, sondern mit jeweils nur einer einzelnen Lage ausgeführt.

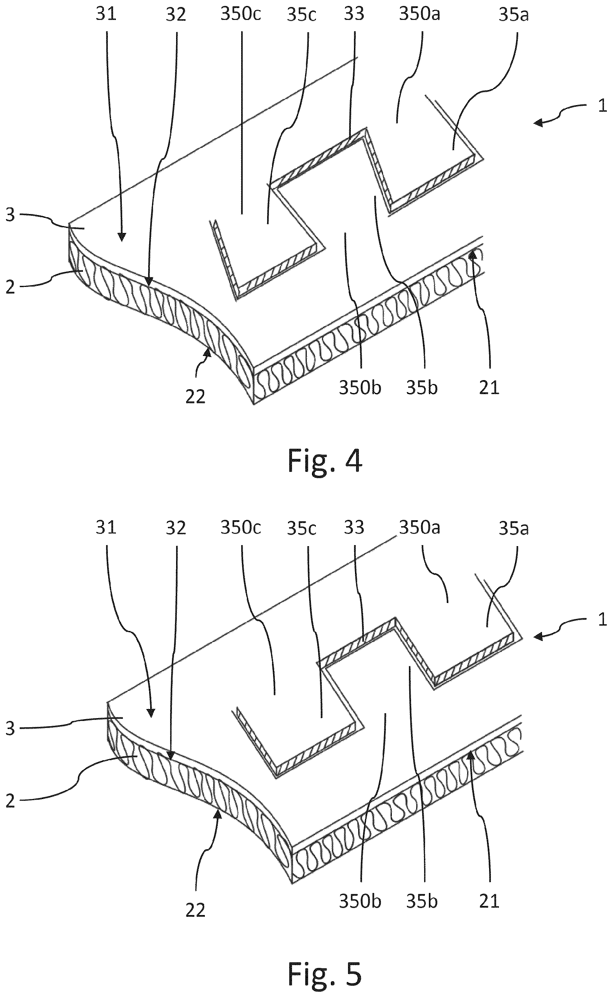

Die Figuren 4 bis 7 zeigen Ausschnitte unterschiedlicher Schallabsorber.

In Figur 4 ist ein Schallabsorber 1 mit einer Grundplatte 2 und einer Deckplatte 3 gezeigt. Sowohl die Grundplatte 2 als auch die Deckplatte 3 weisen eine einzelne Lage auf, genau wie der Schallabsorber gemäß der Figur 3. In Unterschied zu dem Schallabsorber 1 gemäß den Ausführungsformen der Figuren 1 bis 3 weist die Deckplatte 3 in Figur 4 einen Schlitz 33 auf, welcher mehrere Teilflächen 35a, 35b, 35c teilweise umschließt. Die Teilflächen 35a, 35b, 35c sind jeweils über einen Verbindungsbereich 350a, 350b, 350c mit der Deckplatte verbunden. Der Schlitz 33 in der Ausführungsform gemäß der Figur 4 ist so ausgeführt, dass die durch den Schlitz 33 definierten Teilflächen 35a, 35b, 35c trapezförmig sind.

Figur 5 zeigt einen Schallabsorber 1 mit einer Grundplatte 2 und einer Deckplatte 3. Sowohl die Grundplatte 2 als auch die Deckplatte 3 weisen eine einzelne Lage auf, genau wie der Schallabsorber gemäß der Figur 3. In Unterschied zu dem Schallabsorber gemäß der Ausführungsform der Figur 4 ist der Schlitz 33 so ausgeführt, dass die durch den Schlitz 33 definierten Teilflächen 35a, 35b, 35c rechteckig sind.

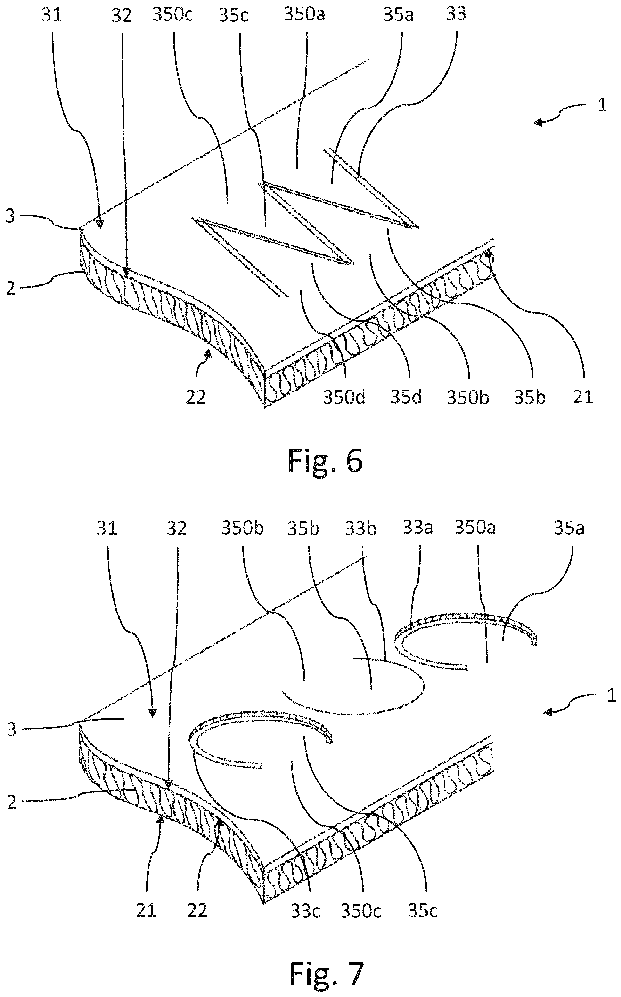

In Figur 6 ist ein Schallabsorber 1 mit einer Grundplatte 2 und einer Deckplatte 3 gezeigt. Sowohl die Grundplatte 2 als auch die Deckplatte 3 weisen eine einzelne Lage auf, genau wie der Schallabsorber gemäß der Figur 3. In Unterschied zu dem Schallabsorber gemäß der Ausführungsform der Figur 4 ist der Schlitz 33 so ausgeführt, dass die durch den Schlitz 33 definierten Teilflächen 35a, 35b, 35c, 35d V-förmig sind.

In Figur 7 ist ein Schallabsorber 1 mit einer Grundplatte 2 und einer Deckplatte 3 gezeigt. Sowohl die Grundplatte 2 als auch die Deckplatte 3 weisen eine einzelne Lage auf, genau wie der Schallabsorber gemäß der Figur 3. In Unterschied zu dem Schallabsorber gemäß den Ausführungsformen der Figuren 4 bis 6 weist die Deckplatte mehrere Schlitze 33a, 33b, 33c, wobei jeder Schlitz 33a, 33b, 33c eine Teilfläche 35a, 35b, 35c der Deckplatte 3 teilweise umschließt und wobei jede Teilfläche 35a, 35b, 35c über jeweils einen Verbindungsbereich 350a, 350b, 350c mit der Deckplatte verbunden ist. Die Schlitze 33a, 33b, 33b sind ellipsenförmig ausgeführt.

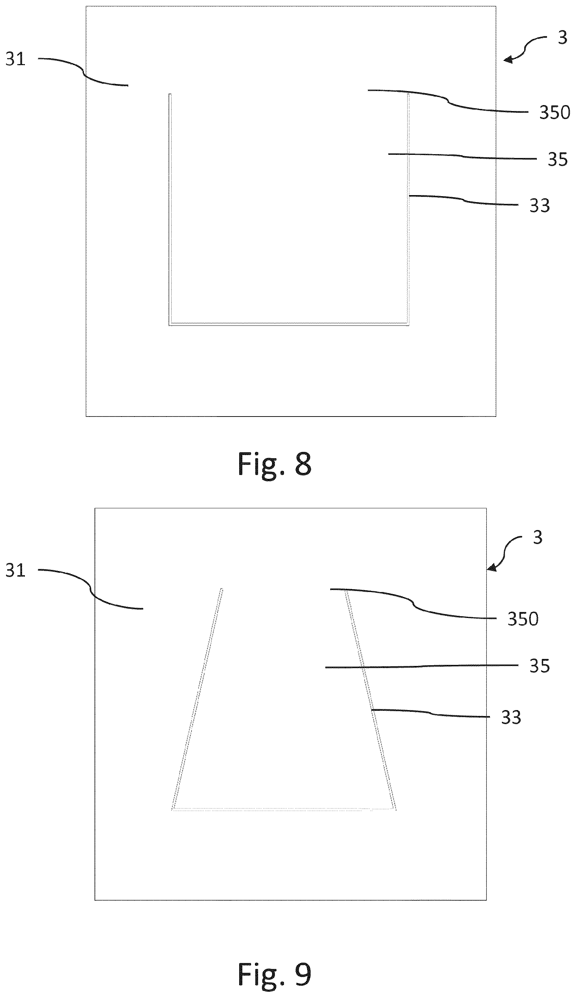

Figuren 8 bis 10 zeigen eine Draufsicht unterschiedlicher Ausführungsformen des Schallabsorbers 1 gemäß der vorliegenden Erfindung.

In Figur 8 ist ein Schlitz 33 vorhanden, welcher eine einzelne Teilfläche 35 teilweise umschließt. Die Teilfläche 35 ist über den Verbindungsbereich 350 mit dem Rest der Deckplatte 3 verbunden. Der Schlitz 33 ist so ausgeführt, dass die Teilfläche 35 eine U-förmige Ausgestaltung aufweist. Die Teilfläche 35 stellt also eine U-förmige freischwingende Biegeplatte dar.

In Figur 9 ist ein Schlitz 33 vorhanden, welcher eine einzelne Teilfläche 35 teilweise umschließt. Die Teilfläche 35 ist über den Verbindungsbereich 350 mit dem Rest der Deckplatte 3 verbunden. In Unterschied zu der Ausführungsform gemäß der Figur 8 ist der Schlitz 33 so ausgeführt, dass die Teilfläche 35 eine trapezförmige Ausgestaltung aufweist. Die Teilfläche 35 stellt also eine trapezförmige freischwingende Biegeplatte dar.

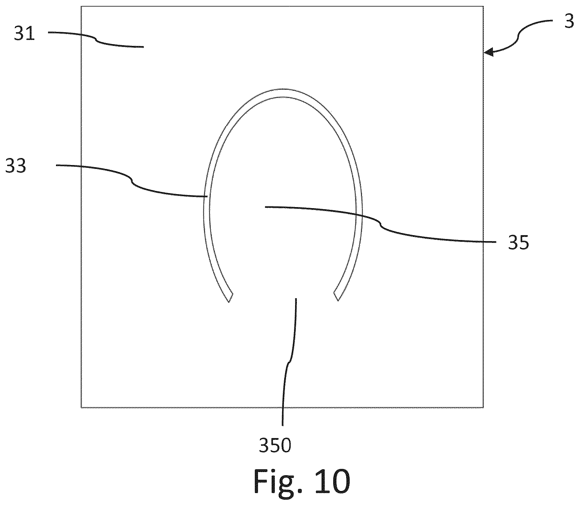

In Figur 10 ist ein Schlitz 33 vorhanden, welche eine einzelne Teilfläche 35 teilweise umschließt. Die Teilfläche 35 ist über den Verbindungsbereich 350 mit dem Rest der Deckplatte 3 verbunden. Der Schlitz 33 ist so ausgeführt, dass die Teilfläche 35 eine ellipsenförmige bzw. C-förmige Ausgestaltung aufweist. Die Teilfläche 35 stellt also eine ellipsenförmige bzw. C-förmige freischwingende Biegeplatte dar.

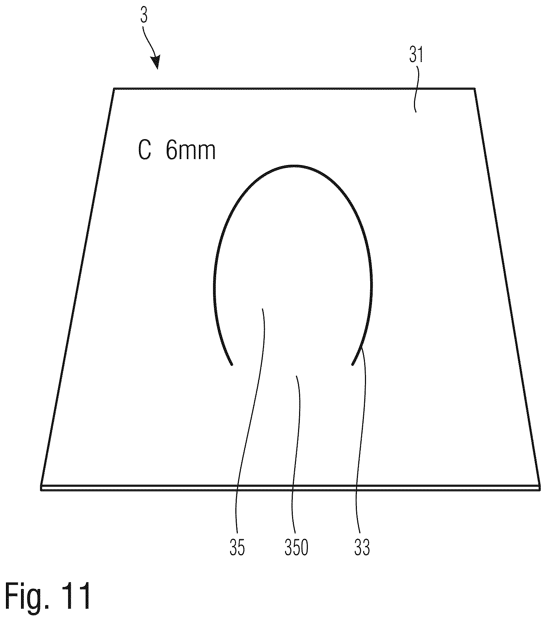

Figuren 11 bis 13 zeigen mögliche Ausführungsformen der Deckplatte 3 gemäß der vorliegenden Erfindung.

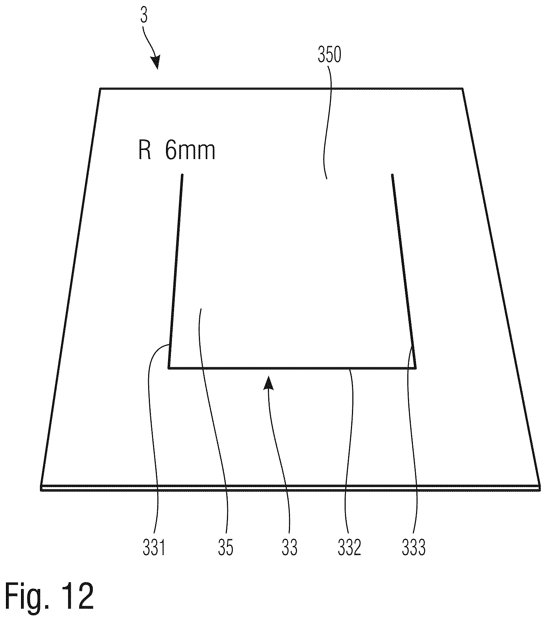

In Figur 11 weist die Deckplatte 3 einen Schlitz 33 auf, welcher ellipsenförmig bzw. C-förmig ausgeführt ist und welcher die als Biegeplatte ausgeführte Teilfläche 35 teilweise umschließt. Die Teilfläche 35 ist über einen Verbindungsbereich 350 mit der Deckplatte 3 verbunden. Die Deckplatte 3 gemäß Figur 12 ist eine HDF-Holzwerkstoffplatte mit einer Dichte von 900 kg/m³ und ist einlagig. Die Deckplatte 3 ist 6 mm dick und ist quadratisch ausgeführt. Die Seite der Deckplatte 3 ist 247,5 mm lang. Der Schlitz 33 ist 310 mm lang und 1,5 mm breit. Der Schlitzflächenanteil des Schlitzes 33 beträgt 0,75% der gesamten Fläche der Deckplatte 3.

In Figur 12 weist die Deckplatte 3 einen Schlitz 33 auf, welcher rechteckig bzw. U-förmig ausgeführt ist. Der Schlitz 33 weist drei gleich lange Seiten 331, 332, 333 auf, welche die als Biegeplatte ausgeführte Teilfläche 35 teilweise umschließen. Die Teilfläche 35 ist über einen Verbindungsbereich 350 mit der Deckplatte 3 verbunden. Die Deckplatte 3 gemäß Figur 12 ist eine HDF-Holzwerkstoffplatte mit einer Dichte von 900 kg/m³ und ist einlagig. Die Deckplatte 3 ist 6 mm dick und ist quadratisch ausgeführt. Die Seite der Deckplatte 3 ist 247,5mm lang. Der Schlitz 33 ist 410 mm lang und 1,5 mm breit. Der Schlitzflächenanteil des Schlitzes 33 beträgt 0,99% der gesamten Fläche der Deckplatte 3.

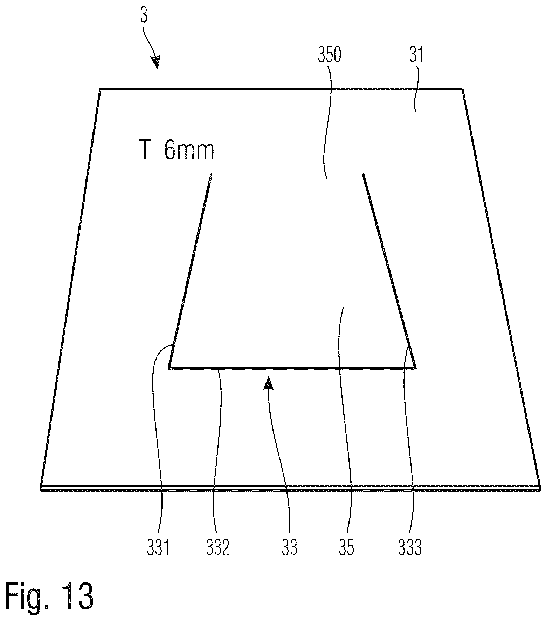

In Figur 13 weist die Deckplatte 3 einen Schlitz 33 auf, welcher trapezförmig ausgeführt ist. Der Schlitz 33 weist drei gleich lange Seiten 331, 332, 333 auf, welche die als Biegeplatte ausgeführte Teilfläche 35 teilweise umschließen.

Die Teilfläche 35 ist über einen Verbindungsbereich 350 mit der Deckplatte 3 verbunden. Die Deckplatte 3 gemäß Figur 13 ist eine HDF-Holzwerkstoffplatte mit einer Dichte von 900 kg/m³ und ist einlagig. Die Deckplatte 3 ist 6 mm dick und ist quadratisch ausgeführt. Die Seite der Deckplatte 3 ist 247,5 mm lang. Der Schlitz 33 ist 415 mm lang und 1,5 mm breit. Der Schlitzflächenanteil des Schlitzes 33 beträgt 1% der gesamten Fläche der Deckplatte 3.

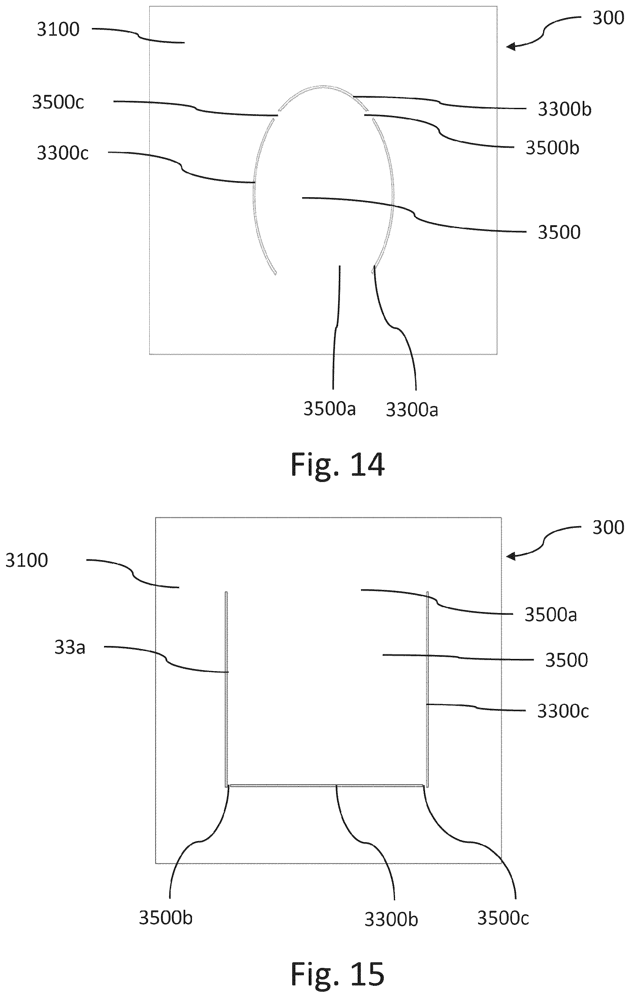

Figur 14 zeigt eine Draufsicht einer nicht erfindungsgemäßes Deckplatte 300, welche aus einer einzigen 6 mm dicken HDF-Holzwerkstoffplatte besteht. Die Deckplatte gemäß Figur 14 weist mehrere Schlitze 3300a, 3300b, 3300c auf, welche eine einzelne Teilfläche 3500 teilweise umschließen. Die Teilfläche 3500 ist über die Verbindungsbereiche 3500a, 3500b, 3500c mit dem Rest der Deckplatte 300 verbunden. Die Schlitze 3300a, 3300b, 3300c sind so ausgeführt, dass die Teilfläche 3500 eine C-förmige Ausgestaltung aufweist. Da die Teilfläche 3500 über mehrere Verbindungsbereiche 3500a, 3500c, 3500d mit der Deckplatte 300 verbunden ist, ist die Teilfläche 3500 keine freischwingende Biegeplatte. Die Deckplatte 300 gemäß der Figur 14 ist quadratisch und weist eine kantenlänge von 247,5 mm auf. Die Summe der Schlitzlänge der Schlitze 3300a, 3300b, 3300c beträgt 404 mm. Die Schlitze 3300a, 3300b, 3300c sind 1,5 mm breit. Der Schlitzflächenanteil der Schlitze 3300a, 3300b, 3300c beträgt 0,98% der gesamten Fläche der Deckplatte 300.

Figur 15 zeigt eine Draufsicht einer nicht erfindungsgemäßes Deckplatte 300, welche aus einer einziger 6 mm dicke HDF-Holzwerkstoffplatte besteht. Die Deckplatte gemäß der Figur 15 weist mehrere Schlitze 3300a, 3300b, 3300c auf, welche eine einzelne Teilfläche 3500 teilweise umschließen. Die Teilfläche 3500 ist über die Verbindungsbereiche 3500a, 3500b, 3500c mit dem Rest der Deckplatte 300 verbunden. Die Schlitze 3300a, 3300b, 3300c sind so ausgeführt, dass die Teilfläche 3500 eine U-förmige Ausgestaltung aufweist. Da die Teilfläche 3500 über mehrere Verbindungsbereiche 3500a, 3500c, 3500d mit der Deckplatte 300 verbunden ist, ist die Teilfläche 3500 keine freischwingende Biegeplatte. Die Deckplatte 300 gemäß der Figur 15 ist quadratisch und weist eine kantenlänge von 247,5 mm auf. Die Summe der Schlitzlänge der Schlitze 3300a, 3300b, 3300c beträgt 414 mm. Die Schlitze 3300a, 3300b, 3300c sind 1,5 mm breit. Der Schlitzflächenanteil der Schlitze 3300a, 3300b, 3300c beträgt 1% der gesamten Fläche der Deckplatte 300.

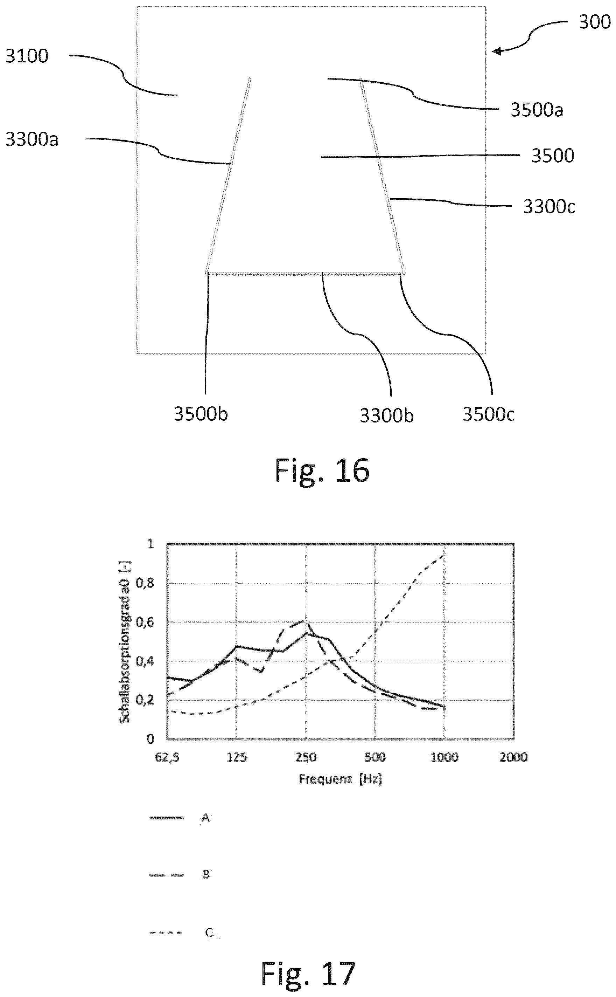

Figur 16 zeigt eine Draufsicht einer nicht erfindungsgemäßes Deckplatte 300, welche aus einer einziger 6 mm dicke HDF-Holzwerkstoffplatte besteht. Die Deckplatte 300 gemäß der Figur 16 weist mehrere Schlitze 3300a, 3300b, 3300c auf, welche eine einzelne Teilfläche 3500 teilweise umschließen. Die Teilfläche 3500 ist über die Verbindungsbereiche 3500a, 3500b, 3500c mit dem Rest der Deckplatte 300 verbunden. Die Schlitze 3300a, 3300b, 3300c sind so ausgeführt, dass die Teilfläche 3500 eine trapezförmige Ausgestaltung aufweist. Da die Teilfläche 3500 über mehrere Verbindungsbereiche 3500a, 3500c, 3500d mit der Deckplatte 300 verbunden ist, ist die Teilfläche 3500 keine freischwingende Biegeplatte. Die Deckplatte 300 gemäß der Figur 16 ist quadratisch und weist eine kantenlänge von 247,5 mm auf. Die Summe der Schlitzlänge der Schlitze 3300a, 3300b, 3300c beträgt 409 mm. Die Schlitze 3300a, 3300b, 3300c sind 1,5 mm breit. Der Schlitzflächenanteil der Schlitze 3300a, 3300b, 3300c beträgt 0,99% der gesamten Fläche der Deckplatte 300.

Figur 17 bis 19 zeigen den Schallabsorptionsgrad in Abhängigkeit von der Frequenz für verschiedene Schallabsorber gemäß der vorliegenden Erfindung. Der Schallabsorptionsgrad wurde mit einem Impedanzrohr nach DIN EN ISO 10534-2 mit den Abmessungen 250 mm x 250 mm (nomineller Innenrohrdurchmesser) ermittelt.

Die Linie A der Figur 17 zeigt den Schallabsorptionsgrad für einen Schallabsorber, welcher eine Deckplatte gemäß der Figur 11 bestehend aus einer 6 mm dicke HDF-Holzwerkstoffplatte mit einer Dichte von 900 kg/m³ und eine 50 mm dicke Grundplatte bestehend aus Melaminharzschaum aufweist. Damit weist der Schallabsorber eine Gesamtdicke von 56 mm auf.

Die Linie B der Figur 17 zeigt den Schallabsorbtionsgrad für einen Schallabsorber, welcher eine Deckplatte gemäß der Figur 14 bestehend aus einer 6 mm dicke HDF-Holzwerkstoffplatte mit einer Dichte von 900 kg/m³ und eine 50 mm dicke Grundplatte bestehend aus Melaminharzschaum aufweist, sodass die Gesamtdicke des Schallabsorbers 56 mm beträgt.

Die Linie C der Figur 17 zeigt den Schallabsorptionsgrad für eine 50 mm dicke Grundplatte bestehend aus Melaminharzschaum.

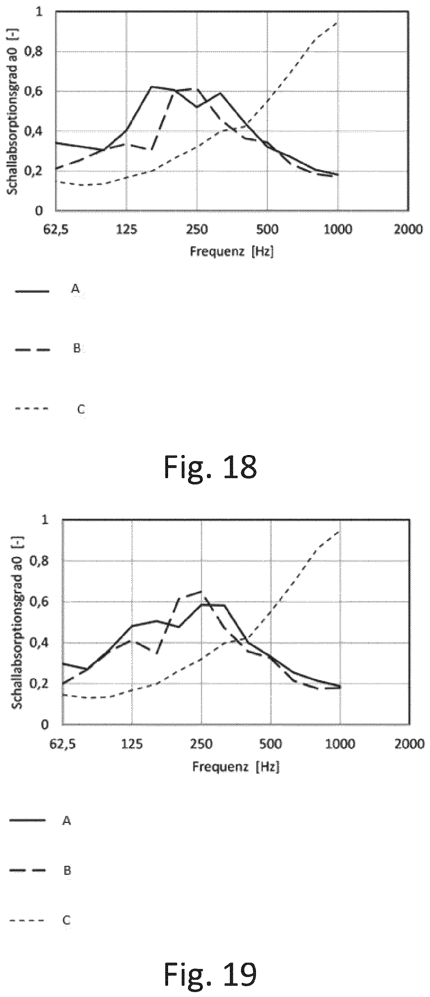

Die Linie A der Figur 18 zeigt den Schallabsorptionsgrad für einen Schallabsorber, welcher eine Deckplatte gemäß der Figur 12 bestehend aus einer 6 mm dicke HDF-Holzwerkstoffplatte mit einer Dichte von 900 kg/m³ und eine 50 mm dicke Grundplatte bestehend aus Melaminharzschaum aufweist. Damit weist der Schallabsorber eine Gesamtdicke von 56 mm auf.

Die Linie B der Figur 18 zeigt den Schallabsorbtionsgrad für einen Schallabsorber, welcher eine Deckplatte gemäß der Figur 15 bestehend aus einer 6 mm dicken HDF-Holzwerkstoffplatte mit einer Dichte von 900 kg/m³ und einer 50 mm dicken Grundplatte bestehend aus Melaminharzschaum aufweist, sodass die Gesamtdicke des Schallabsorbers 56 mm beträgt.

Die Linie C der Figur 18 zeigt den Schallabsorptionsgrad für eine 50 mm dicke Grundplatte bestehend aus
Melaminharzschaum.

Die Linie A der Figur 19 zeigt den Schallabsorptionsgrad für einen Schallabsorber, welcher eine Deckplatte gemäß der Figur 13 bestehend aus einer 6 mm dicken HDF-Holzwerkstoffplatte mit einer Dichte von 900 kg/m³ und einer 50 mm dicken Grundplatte bestehend aus Melaminharzschaum aufweist. Damit weist der Schallabsorber eine Gesamtdicke von 56 mm auf.

Die Linie B der Figur 19 zeigt den Schallabsorbtionsgrad für einen Schallabsorber, welcher eine Deckplatte gemäß der Figur 16 bestehend aus einer 6 mm dicken HDF-Holzwerkstoffplatte mit einer Dichte von 900 kg/m³ und einer 50 mm dicken Grundplatte bestehend aus Melaminharzschaum aufweist, sodass die Gesamtdicke des Schallabsorbers 56 mm beträgt.

Die Linie C der Figur 19 zeigt den Schallabsorptionsgrad für eine 50 mm dicke Grundplatte bestehend aus
Melaminharzschaum.

Wie dies aus den Figuren 17 bis 19 ersichtlich ist, ist der Schallabsorptionsgrad für einen Schallabsorber gemäß der vorliegenden Erfindung insbesondere im Tieffrequenzbereich zwischen 62,5 Hz und 250 Hz besser als der Schallabsorptionsgrad für einen aus dem Stand der Technik bekannten Schallabsorber. Insbesondere zeigt es sich, dass der Schallabsorptionsgrad für einen Schallabsorber gemäß der vorliegenden Erfindung in einem Bereich zwischen circa 125 Hz und circa 160 Hz gemessen nach DIN EN ISO 10534-2 deutlich höher als 0,4 ist und in dem weiteren Verlauf bis zu circa 250 Hz ausgeglichener als der Schallabsorptionsgrad für einen aus dem Stand der Technik bekannten Schallabsorber ist.

Der Schallabsoprtionsgrad kann durch die Form des Schlitzes, die Dicke der Deckplatte und die Materialauswahl so beeinflusst werden, dass der Schallaborptionsgrad auch bei tieferen Frequenzen, wie beispielweise zwischen circa 50 Hz und circa 100 Hz, gemessen nach DIN EN ISO 10534-2 zumindest 0,4 beträgt.

Selbstverständlich ist die Erfindung nicht auf die dargestellten Ausführungsformen beschränkt. Die vorstehende Beschreibung ist daher nicht als beschränkend, sondern als erläuternd anzusehen. Die Formulierungen "bestehend aus" bzw. "bestehen aus" bzw. entsprechende Formulierungen sind dabei auch so zu verstehen, dass ggf. auch weitere Merkmale bzw. Bestandteile vorhanden sein können, d.h. diese Formulierungen sind entsprechend auch als "umfassend" bzw. "umfassen" bzw. die entsprechende Formulierung des Wortstamms "umfassen" oder des Wortstamms "enthalten" zu verstehen. Die nachfolgenden Ansprüche sind so zu verstehen, dass ein genanntes Merkmal in zumindest einer Ausführungsform der Erfindung vorhanden ist. Dies schließt die Anwesenheit weiterer Merkmale nicht aus. Die nachfolgenden Ansprüche sind nicht so zu verstehen, dass ein genanntes Merkmal in jeder Ausführungsform der Erfindung vorhanden ist. Sofern die Ansprüche und die vorstehende Beschreibung "erste" und "zweite" Ausführungsformen definieren, so dient diese Bezeichnung der Unterscheidung zweier gleichartiger Ausführungsformen, ohne eine Rangfolge festzulegen.

## Patentansprüche

1. Schallabsorber (1) enthaltend:
eine Grundplatte (2) mit einer ersten Seite (21) und einer gegenüberliegenden zweiten Seite (22), welche ein schallabsorbierendes Material enthält oder daraus besteht;
eine Deckplatte (3) mit einer ersten Seite (31) und einer gegenüberliegenden zweiten Seite (32), wobei die zweite Seite (32) der Deckplatte (3) auf der ersten Seite (21) der Grundplatte (2) angeordnet ist;
**dadurch gekennzeichnet, dass**
die Deckplatte (3) zumindest einen Schlitz (33) aufweist, welcher zumindest eine Teilfläche (35) der Deckplatte (3) teilweise umschließt,
so dass die Teilfläche (35) über zumindest einen Verbindungsbereich (350) mit der Deckplatte (3) verbunden ist,
wobei der Schallabsorber (1) in einem Frequenzbereich von circa 50 Hz bis circa 250 Hz oder zwischen etwa 65 Hz und etwa 200 Hz oder zwischen etwa 50 Hz und etwa 150 Hz einen Schallabsorptionsgrad von mehr als etwa 0,2 nach DIN EN ISO 10534-2 aufweist.

2. Schallabsorber nach Anspruch 1, **dadurch gekennzeichnet, dass** die Deckplatte (3) zumindest zwei Schlitze (33a, 33b) aufweist, welche die Teilfläche (35) zumindest teilweise umschließen.

3. Schallabsorber nach Anspruch 1 oder 2, **dadurch gekennzeichnet, dass** die Teilfläche (35) eine freischwingende Biegeplatte ist.

4. Schallabsorber nach einem der Ansprüche 1 bis 3, **dadurch gekennzeichnet, dass** die Deckplatte (3) eine Dicke von etwa 0,5 mm bis etwa 10 mm oder von etwa 1 mm bis etwa 7 mm oder von etwa 3 mm bis etwa 6 mm aufweist.

5. Schallabsorber nach einem der Ansprüche 1 bis 4, **dadurch gekennzeichnet, dass** die Grundplatte eine Dicke von etwa 20 mm bis etwa 100 mm oder von etwa 40 mm bis etwa 90 mm oder von etwa 40 mm bis etwa 60 mm aufweist.

6. Schallabsorber nach einem der Ansprüche 1 bis 5, **dadurch gekennzeichnet, dass** das schallabsorbierende Material der Grundplatte (2) porös ist und/oder
dass das schallabsorbierende Material der Grundplatte (2) einen Strömungswiderstand von etwa 500 Ns/m³ bis etwa 6000 Ns/m³ nach DIN EN 29053:1993-05 aufweist und/oder dass das schallabsorbierende Material der Grundplatte (2) einen Melaminharzschaum enthält oder daraus besteht.

7. Schallabsorber nach einem der Ansprüche 1 bis 6, **dadurch gekennzeichnet, dass** die Deckplatte (3) aus Holz oder einem Polymer oder einem duroplastischem Harz oder einem Plattenwerkstoff gefertigt ist.

8. Schallabsorber nach einem der Ansprüche 1 bis 7, wobei der Schallabsorber (1) weiterhin zumindest einen akustisch transparenten Stoff enthält, welcher auf der ersten Seite (31) der Deckplatte (3) angeordnet ist und/oder
wobei der Schallabsorber (1) weiterhin zumindest eine erste schallabsorbierende Schicht aufweist, welche auf der ersten Seite (31) der Deckplatte (3) angeordnet ist, wobei die erste schallabsorbierende Schicht derart ausgeführt und angeordnet ist, dass der Schallabsorber (1) in einem Frequenzbereich zwischen 50 Hz und 10 kHz einen Schallabsorptionsgrad von mehr als etwa 0,2 nach DIN EN ISO 10534-2 aufweist.

9. Schallabsorber nach einem der Ansprüche 1 bis 8, **dadurch gekennzeichnet, dass** der zumindest eine Schlitz (33) trapezförmig, halbkreisförmig, ellipsenförmig, U-förmig, V-förmig oder mit einer anderen Form ausgestaltet ist.

10. Schallabsorber nach einem der Ansprüche 1 bis 9, **dadurch gekennzeichnet, dass** der zumindest eine Schlitz eine Breite von etwa 0,5 mm bis etwa 5 mm oder von etwa 1,5 mm bis etwa 3 mm oder von etwa 2 mm bis etwa 5 mm aufweist.

11. Schallabsorber nach einem der Ansprüche 1 bis 10, **dadurch gekennzeichnet, dass** der zumindest eine Schlitz eine Länge von etwa 50 mm bis etwa 750 mm oder von etwa 100 mm bis etwa 400 mm oder von etwa 60 mm bis etwa 350 mm aufweist.

12. Schallabsorber nach einem der Ansprüche 1 bis bis 11,
**dadurch gekennzeichnet, dass** die Deckplatte (3) mehrlagig ausgeführt ist und/oder
dass die Grundplatte (2) mehrlagig ausgeführt ist.

13. Schallabsorber nach einem der Ansprüche 1 bis 12, **dadurch gekennzeichnet, dass** die Deckplatte (3) einen Elastizitätsmodul von etwa 200 N·mm² bis etwa 20 kN·mm² oder
von etwa 500 N·mm² bis etwa 15 kN·mm² oder
von etwa 1 kN·mm² bis etwa 10 kN·mm² aufweist.

14. Schallabsorber nach einem der Ansprüche 1 bis 13, **dadurch gekennzeichnet, dass** die zweite Seite (32) der Deckplatte (3) mit der ersten Seite (21) der Grundplatte (2) vollflächig mit Ausnahme der Teilflächen (35) verklebt ist oder
dass die zweite Seite (32) der Deckplatte (3) mit der ersten Seite (21) der Grundplatte (2) in Teilflächen verklebt ist oder
dass die zweite Seite (32) der Deckplatte (3) mit der ersten Seite (21) der Grundplatte (2) an deren Rändern verklebt ist oder
dass die Deckplatte (3) mit der Grundplatte (2) nicht verklebt ist oder
dass die Deckplatte (3) von der Grundplatte (2) zwischen circa 0,1 mm und 20 mm beabstandet ist oder
dass die Deckplatte (3) von der Grundplatte (2) zwischen circa 2 mm und 18 mm beabstandet ist oder
dass die Deckplatte (3) von der Grundplatte (2) zwischen circa 6 mm und 16 mm beabstandet ist oder
dass die Deckplatte (3) von der Grundplatte (2) zwischen circa 8 mm und 12 mm beabstandet ist oder
dass die Deckplatte (3) von der Grundplatte (2) zwischen circa 9 mm und 11 mm beabstandet ist.
